(19) Europäisches Patentamt European Patent Office Office européen des brevets

(11) **EP 2 377 264 B1**

(12) **FASCICULE DE BREVET EUROPEEN**

(45) Date de publication et mention de la délivrance du brevet:
**02.06.2021 Bulletin 2021/22**

(21) Numéro de dépôt: **09798945.3**

(22) Date de dépôt: **29.12.2009**

(51) Int Cl.:
*H04L 9/18* (2006.01)     *H04L 9/06* (2006.01)
*H04N 7/167* (2011.01)

(86) Numéro de dépôt international:
**PCT/EP2009/067977**

(87) Numéro de publication internationale:
**WO 2010/081631 (22.07.2010 Gazette 2010/29)**

(54) **PROCEDE ET MODULE DE RENOUVELLEMENT DU CODE D'UN ALGORITHME CRYPTOGRAPHIQUE, PROCEDE ET MODULE DE GENERATION D'UNE GRAINE, PROCESSEUR DE SECURITE ET SUPPORT D'ENREGISTREMENT POUR CES PROCEDES**

VERFAHREN UND MODUL ZUM ERNEUERN DES CODES EINES KRYPTOGRAFISCHEN ALGORITHMUS, VERFAHREN UND MODUL ZUR ERZEUGUNG EINES SEED, SICHERHEITSPROZESSOR UND AUFZEICHNUNGSMEDIUM FÜR DIESE VERFAHREN

METHOD AND MODULE FOR RENEWING THE CODE OF A CRYPTOGRAPHIC ALGORITHM, METHOD AND MODULE FOR GENERATING A SEED, SECURITY PROCESSOR AND RECORDING MEDIUM FOR THESE METHODS

(84) Etats contractants désignés:
**AT BE BG CH CY CZ DE DK EE ES FI GB GR HR HU IE IS IT LI LT LU LV MC MK MT NL NO PL PT RO SE SI SK SM TR**

(30) Priorité: **13.01.2009 FR 0950148**

(43) Date de publication de la demande:
**19.10.2011 Bulletin 2011/42**

(73) Titulaire: **Viaccess**
**92057 Paris La Défense (FR)**

(72) Inventeur: **SOQUET, Patrick**
**F-75005 Paris (FR)**

(74) Mandataire: **Colombo, Michel et al**
**Brevinnov**
**310 avenue Berthelot**
**69008 Lyon (FR)**

(56) Documents cités:
EP-A- 1 863 285          WO-A-2006/085283
WO-A-2007/026287     WO-A-2007/037869
WO-A1-2005/081525    WO-A1-2005/120066
WO-A1-2008/025900    WO-A2-2008/142612
DE-A1-102005 013 830  US-A1- 2002 034 300
US-A1- 2003 149 876     US-A1- 2004 268 117
US-A1- 2006 002 550

- Bart Preneel ET AL: "A SOFTWARE IMPLEMENTATION OF THE McELIECE PUBLIC-KEY CRYPTOSYSTEM", Proceedings of the 13th Symposium on Information Theory in the Benelux, 1 January 1992 (1992-01-01), pages 119-126, XP055713178,
- JACQUES STERN: "A New Paradigm for Public Key Identification", IEEE TRANSACTIONS ON INFORMATION THEORY, IEEE PRESS, USA, vol. 42, no. 6, 1 November 1996 (1996-11-01), XP011026690, ISSN: 0018-9448

**EP 2 377 264 B1**

**Description**

L'invention concerne un procédé et un module de renouvellement du code, exécutable ou interprétable par un calculateur électronique, d'un algorithme cryptographique. L'invention concerne également un procédé et un module de génération d'une graine utilisée dans ce procédé de renouvellement. L'invention concerne également un processeur de sécurité et un support d'enregistrement d'informations pour la mise en œuvre de ces procédés.

Un algorithme cryptographique permet de chiffrer une donnée D à l'aide d'une clé K pour obtenir un cryptogramme D* ou de déchiffrer un cryptogramme D* à l'aide d'une clé K pour obtenir une donnée D en clair. Lorsqu'il est implémenté sur un calculateur électronique, cet algorithme cryptographique correspond à un code exécutable ou interprétable. On dit que le code est exécutable lorsqu'il a été compilé au préalable afin de pouvoir être directement exécuté par le calculateur. On dit que le code est « interprété » lorsqu'il est traduit en instructions directement exécutables par le calculateur au fur et à mesure de son exécution. Cette traduction en instructions exécutables est réalisée par une machine connue sous le terme de « machine virtuelle », par exemple, dans le langage JAVA® de SUN Microsystems®.

Que le code soit exécutable ou interprétable, au plus bas niveau, ce code est constitué par une succession de bits. Parmi cette succession de bits on discerne au moins N constantes numériques indépendantes de la donnée D, de la clé K et du cryptogramme D*. Chaque constante numérique correspond à un opérande ou à un mnémonique d'une instruction du code exécutable ou interprétable. Un opérande est typiquement un paramètre d'une instruction dont la valeur est constante. Au plus bas niveau, une instruction s'écrit en binaire et se présente donc également sous la forme d'une constante numérique dans le code exécutable ou interprétable. Cette instruction correspond à un mnémonique de bas niveau.

Par exemple, les procédés de renouvellement du code d'un algorithme cryptographique sont utilisés lorsque qu'on souhaite renforcer le niveau de sécurité d'un système en rendant secret l'algorithme cryptographique. Cet algorithme peut être propriétaire ou dérivé d'une famille d'algorithmes connue tels que DES (Data Encryption Standard) ou AES (Advanced Encryption Standard). Dans ce cas de figure, la sécurité du système dépend du secret de la clé, de l'algorithme et de ses paramètres d'exécution.

Pour mieux comprendre les applications des algorithmes cryptographiques et la terminologie associée, on pourra se reporter au document «Applied Cryptography- Second Edition - Bruce Schneier John Wiley & Sons, 1996 ».

Pour conserver secret l'algorithme cryptographique de nombreuses précautions sont prises. Par exemple, cet algorithme cryptographique est enregistré et exécuté uniquement dans un processeur de sécurité conçu pour rendre difficile toute tentative de cryptanalyse. Ce processeur de sécurité réalise les opérations cryptographiques pour le compte d'autres équipements qui sont moins sécurisés que lui.

Toutefois, malgré ces précautions, il arrive que l'algorithme cryptographique soit découvert et rendu public. Cela constitue une sérieuse brèche dans les systèmes sécurisés utilisant cet algorithme cryptographique car le secret des données chiffrées repose dès lors uniquement sur la préservation du secret qui entoure la clé.

Dans une telle situation, il est souhaitable de renouveler l'algorithme cryptographique en le remplaçant par un nouvel algorithme cryptographique secret. Ce nouvel algorithme cryptographique secret est appelé l' « algorithme renouvelé » tandis que l'ancien algorithme qu'il remplace est appelé «ancien algorithme ». Les chiffrements ou déchiffrements réalisés à l'aide de l'algorithme cryptographique renouvelé ne sont pas compatibles avec ceux réalisés à l'aide de l'ancien algorithme. Ainsi, l'ancien algorithme ne permet pas de déchiffrer les cryptogrammes déchiffrables à l'aide de l'algorithme renouvelé. L'ancien algorithme ne permet pas non plus d'obtenir le même cryptogramme que celui obtenu à l'aide de l'algorithme renouvelé lorsqu'ils sont tous les deux appliqués à la même donnée en clair.

Les procédés de renouvellement du code de l'algorithme cryptographique sont utilisés pour obtenir le code de l'algorithme cryptographique renouvelé.

Plusieurs procédés de renouvellement sont connus. Par exemple, un premier procédé consiste à envoyer, via un réseau de transmission d'informations, le code d'un algorithme cryptographique renouvelé à un processeur de sécurité. Une telle façon de procéder nécessite une bande passante importante sur le réseau. De plus, l'écoute et la cryptanalyse du code transmis sur le réseau peut permettre de découvrir l'algorithme cryptographique renouvelé et donc compromettre la sécurité du système.

Un second procédé consiste à enregistrer initialement, dans un même processeur de sécurité, plusieurs codes, appelés « variantes », d'algorithmes cryptographiques renouvelés. Ensuite, lorsque cela est nécessaire, le code de l'algorithme cryptographique actuellement utilisé est désactivé et l'on active à la place l'exécution du code d'une des variantes préenregistrées. L'activation d'une variante de l'algorithme cryptographique est déclenchée en réponse à la réception d'un message d'activation. Ce second type de procédé ne nécessite pas une bande passante importante pour transmettre le message d'activation puisque ce message d'activation ne contient pas le code de l'algorithme cryptographique renouvelé. De plus, l'écoute et la cryptanalyse du message d'activation reçu par le processeur de sécurité ne permettent pas à eux seuls de découvrir l'algorithme cryptographique renouvelé.

Par contre, ce second procédé nécessite plus de ressources mémoires puisqu'il faut enregistrer initialement les différentes variantes de l'algorithme cryptographique dans le processeur de sécurité. Si l'ensemble du code implémenté dans le processeur de sécurité devient connu, chaque variante de l'algorithme cryptographique le devient également.

WO2008/142612A2 décrit un procédé de renouvellement du code d'un algorithme cryptographique en renouvellement progressivement la clé de chiffrement.

De l'état de la technique est également connu des articles suivants :

- Bart Preneel et AI : "A software implementation of the McEliece Public-key cryptosystem", Proceedings of the 13th Symposium on information theory in the Benelux, 1 janvier 1992, pages 119-126, et
- Jacques Stern : "A new paradigm for public key identification", IEEE Transaction on information theory, IEEE Press USA, vol. 42, n°6, 1 novembre 1996.

L'article de Bart Preneel divulgue que pour réduire la place qu'occupe une clé cryptographique en mémoire, il est possible de la générer par expansion déterministe d'une graine.

L'article de Jacques Stern décrit un procédé d'authentification dans lequel une permutation est générée à l'aide d'une graine et d'une expansion déterministe.

L'invention vise à remédier à au moins l'un de ces inconvénients en proposant un procédé amélioré de renouvellement du code d'un algorithme cryptographique.

Elle a donc pour objet un procédé de renouvellement conforme à la revendication 1.

Une expansion déterministe est une opération consistant à générer une suite de nombres à partir d'une graine de telle sorte que, à chaque fois que la même graine est utilisée pour initialiser l'expansion, la suite de nombres obtenue est la même

Dans le procédé ci-dessus, la taille de la graine est très inférieure à la taille du code de l'algorithme cryptographique renouvelé. En effet, la taille de l'algorithme renouvelé est au moins supérieure à la taille des N constantes. Ainsi, ce procédé est moins gourmand en bande passante que les procédés où le code complet de l'algorithme est transmis au travers d'un réseau de transmission d'informations. De plus, puisque la graine est tirée de façon aléatoire, l'analyse de la graine reçue n'est pas suffisante à elle seule pour retrouver l'algorithme cryptographique renouvelé. En effet, pour cela, il faut aussi connaître l'algorithme utilisé pour réaliser l'expansion de la graine. Or cet algorithme n'est pas transmis par l'intermédiaire du réseau de transmission d'informations.

Ce procédé ne nécessite pas non plus le stockage initial d'une multitude de variantes d'algorithmes cryptographiques. Ainsi, ce procédé exploite moins de ressources mémoires du côté du processeur qui exécute l'algorithme cryptographique.

Contrairement aux procédés consistant à activer une variante préenregistrée de l'algorithme cryptographique, la découverte du code exécutée par le processeur de sécurité n'est pas suffisante à elle seule pour déterminer le code de l'algorithme cryptographique renouvelé. Pour cela, il faut aussi connaître la graine reçue.

Enfin, la génération et le remplacement des N constantes sont réalisés beaucoup moins fréquemment que l'exécution de l'algorithme cryptographique. Ainsi, la découverte de l'algorithme utilisé pour l'expansion de la graine et pour la génération des N nouvelles constantes numériques est rendue plus difficile. Par exemple, des tentatives de cryptanalyse basées sur l'analyse de courbes de consommation d'énergie, de courbes de rayonnement électromagnétique ou d'autres techniques basées sur des signaux générés par le processeur de sécurité lorsqu'il fonctionne, sont plus difficiles à utiliser.

Les modes de réalisation de ce procédé de renouvellement peuvent comporter une ou plusieurs des caractéristiques des revendications dépendantes.

Ces modes de réalisation du procédé de renouvellement présentent en outre les avantages suivants :

- remplacer des opérandes et/ou opérateurs mathématiques du code permet de ne pas modifier l'ordre d'exécution des instructions du code de l'algorithme cryptographique ce qui simplifie la mise en œuvre de ce procédé de renouvellement ;
- l'utilisation d'un code secret pour indiquer qu'une seconde partie d'un message, normalement utilisée à d'autres fins, contient la graine permet de cacher la transmission de cette graine ;
- cacher le code secret et la graine dans une redondance cryptographique d'un message permet de transmettre des données valides dans tous les autres champs du message et donc de ne pas modifier le comportement du récepteur même lorsque la redondance cryptographique contient la graine ou le code secret ;
- déclencher le remplacement des N constantes en réponse à un événement déclencheur indépendant de la réception de la graine permet de rendre plus difficilement identifiable le message reçu qui contient la graine ;
- utiliser une graine dont la taille est au moins dix fois inférieure au nombre de bits nécessaires pour coder les N constantes numériques permet d'économiser encore plus de bande passante sur le réseau.

L'invention a également pour objet un module de renouvellement du code de l'algorithme cryptographique pour mettre en œuvre le procédé de renouvellement ci-dessus.

L'invention a également pour objet un processeur de sécurité apte à exécuter ou à interpréter le code de l'algorithme cryptographique. Ce processeur de sécurité comprend le module de renouvellement ci-dessus.

L'invention a également pour objet un procédé de génération d'une graine destinée à être utilisée par le procédé de renouvellement ci-dessus.

La vérification de la robustesse de l'algorithme de chiffrement correspondant à l'algorithme cryptographique renouvelé permet de n'utiliser que des graines permettant d'obtenir des algorithmes cryptographiques robustes.

L'invention a également pour objet un module de génération de la graine conforme pour mettre en œuvre le procédé de génération ci-dessus.

Enfin, l'invention a également pour objet un support d'enregistrement d'informations contenant des instructions pour la mise en œuvre des procédés ci-dessus, lorsqu'elles sont exécutées par un calculateur électronique.

L'invention sera mieux comprise à la lecture de la description qui va suivre, donnée uniquement à titre d'exemple non limitatif et faite en se référant aux dessins sur lesquels :

- la figure 1 est une illustration schématique d'un système de transmission d'un contenu multimédia embrouillé entre un émetteur et un récepteur,
- la figure 2 est une illustration schématique d'une table de conversion utilisée dans l'émetteur et le récepteur du système de la figure 1,
- la figure 3 est une illustration schématique du contenu d'une mémoire de l'émetteur du système de la figure 1,
- les figures 4 et 5 sont des illustrations schématiques de tables d'indirection utilisées, resepctivement, par l'émetteur et le récepteur du système de la figure 1,
- la figure 6 est une illustration schématique du contenu d'une mémoire utilisé par le récepteur du système de la figure 1 ;
- la figure 7 est un organigramme d'un procédé de transmission de contenu multimédia embrouillé dans lequel sont mis en œuvre des phases de renouvellement du code d'un algorithme cryptographique et de génération d'une graine pour renouveler ce code ;
- la figure 8 est une illustration schématique d'une suite de nombres obtenue à partir d'un générateur déterministe ;
- la figure 9 est une illustration schématique et partielle d'une trame d'informations correspondant à un message ECM (Entitlement Control Message) ;
- la figure 10 est un organigramme d'un procédé de transmission de données par un canal caché entre l'émetteur et le récepteur du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias embrouillés. Pour plus d'informations sur cette terminologie, le lecteur peut se reporter au document suivant : « Functional Model of Conditional Access System », EBU Review-Technical European Broadcasting Union, Bruxel, BE, n° 266, 21 Décembre 1995.

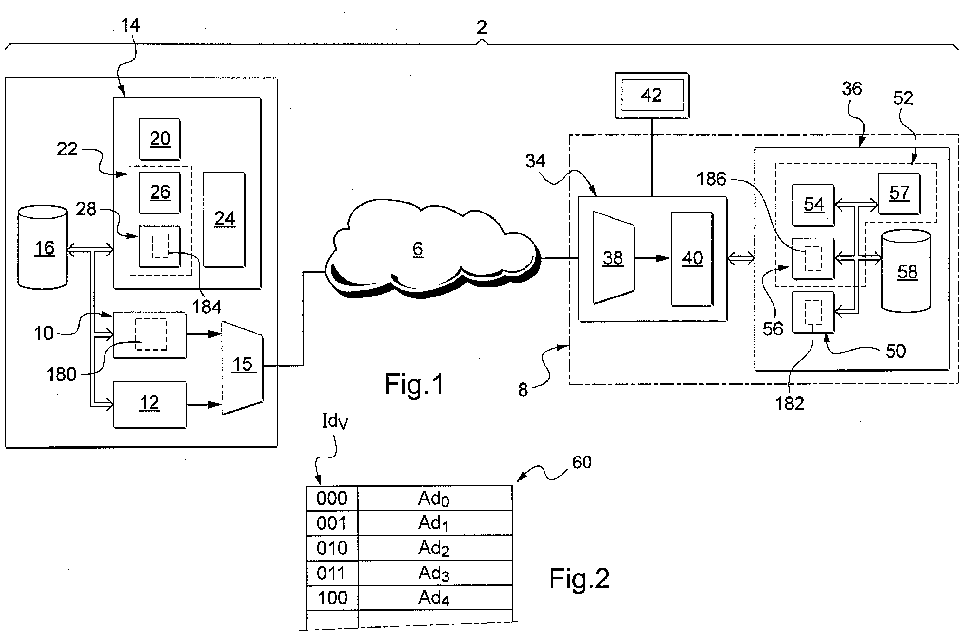

La figure 1 représente un système 2 de transmission d'un contenu multimédia entre un émetteur 4 et une multitude de récepteurs. Les récepteurs sont raccordés à l'émetteur 4 par l'intermédiaire d'un réseau 6 de transmission d'informations. Par exemple, le réseau 6 est un réseau satellitaire auquel les récepteurs sont raccordés par l'intermédiaire de liaisons sans fil.

Pour simplifier l'illustration, seul un récepteur 8 a été représenté sur la figure 1. On suppose ici que les autres récepteurs sont identiques au récepteur 8.

L'émetteur 4 comprend :

- un module cryptographique 10 apte à exécuter des algorithmes cryptographiques tels qu'un algorithme F de chiffrement d'un mot de contrôle CW,
- un générateur 12 de message ECM (Entitlement Control Message)/EMM (Entitlement Management Message),
- un module 14 de génération d'une graine pour le renouvellement d'un algorithme $F^{-1}$ de déchiffrement d'un cryptogramme CW* du mot de contrôle CW.

Le module 10 est également apte à exécuter un algorithme de chiffrement du contenu multimédia à l'aide du mot de contrôle CW pour obtenir un contenu multimédia embrouillé.

Des sorties des modules 10 et 12 sont raccordées à un multiplexeur 15. Ce multiplexeur 15 multiplexe le contenu multimédia embrouillé par le module 10 aux messages ECM et EMM générés par le générateur 12 pour obtenir un contenu multimédia multiplexé. Le contenu multimédia multiplexé est diffusé vers les récepteurs par l'intermédiaire du réseau 6.

Les modules 10 et 14 et le générateur 12 sont raccordés à une mémoire 16 par l'intermédiaire d'un bus de transmission d'informations.

Le module 14 comprend :

- un générateur 20 apte à tirer aléatoirement une graine,
- un sous-module 22 de création du code exécutable d'un algorithme F' de chiffrement correspondant à un algorithme F'$^{-1}$ de déchiffrement renouvelé, et
- un vérificateur 24 de robustesse de l'algorithme F' créé par le sous-module 22.

Un algorithme de chiffrement correspond à un algorithme de déchiffrement si le cryptogramme D* qu'il crée est déchiffrable à l'aide de l'algorithme de déchiffrement. Dans le cas d'une cryptographie symétrique, cela signifie que l'algorithme de chiffrement est l'inverse de l'algorithme de déchiffrement.

Le sous-module 22 comprend :

- un générateur déterministe 26 d'une suite de nombres initialisable avec la graine tirée par le générateur 20, et
- un constructeur 28 de l'algorithme F' de chiffrement correspondant à l'algorithme F'$^{-1}$ de déchiffrement renouvelé.

Par exemple, le générateur 26 est un générateur pseudo-aléatoire connu sous l'acronyme PRNG (Pseudo Random Number Generator). Ainsi ici, un nombre tiré de façon « aléatoire » désigne également un nombre tiré de façon pseudo-aléatoire.

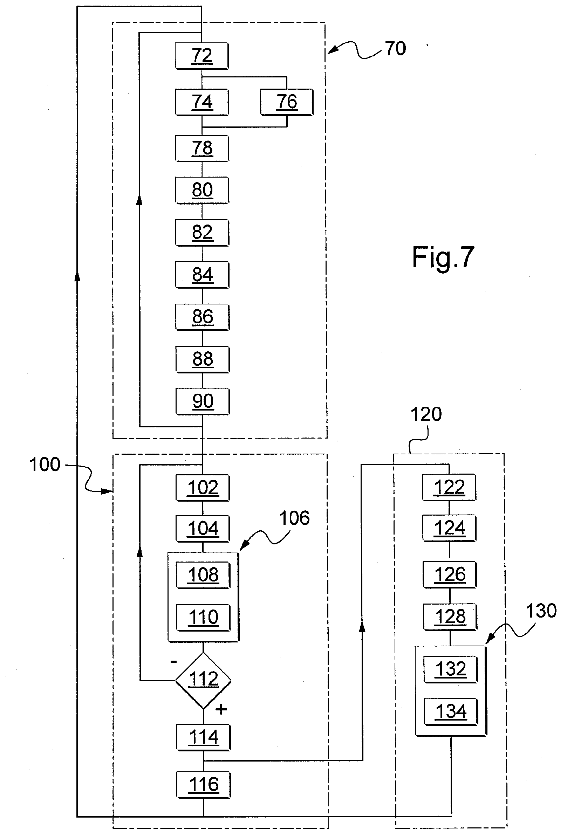

Le module 14 est réalisé à partir d'un calculateur électronique programmable apte à exécuter des instructions enregistrées sur un support d'enregistrement d'informations. A cet effet, la mémoire 16 comprend les instructions et les données nécessaires à l'exécution du procédé de la figure 7.

Le récepteur 8 comprend un décodeur 34 du contenu multimédia multiplexé raccordé à un processeur 36 de sécurité.

Le décodeur 34 comprend un démultiplexeur 38 apte à démultiplexer le contenu multimédia multiplexé et un désembrouilleur 40 apte à désembrouiller le contenu multimédia à l'aide du mot de contrôle CW qui lui est fourni par le processeur 36.

Le décodeur 34 est raccordé à un écran 42 tel qu'un écran de télévision apte à afficher en clair le contenu multimédia. L'expression « en clair » indique que le contenu multimédia affiché sur l'écran 42 est directement compréhensible par un être humain.

Dans ce cas particulier, le processeur 36 est amovible. Il peut donc être connecté au et déconnecté du décodeur 34 de façon réversible. Par exemple, le processeur 36 est une carte à puce.

Le processeur 36 comprend :

- un module cryptographique 50 apte à exécuter l'algorithme F$^{-1}$ de déchiffrement du cryptogramme CW*, et
- un module 52 de renouvellement de l'algorithme de déchiffrement exécuté par le module 50.

Le module 52 comprend un générateur déterministe 54 identique au générateur 26 et un constructeur 56 de l'algorithme de déchiffrement renouvelé et un sous-module 57 de réception d'une graine.

Le module 50, le générateur 54 et le constructeur 56 sont raccordés à une mémoire 58.

Le processeur 36 est réalisé à partir d'un calculateur électronique programmable apte à exécuter des instructions enregistrées sur un support d'enregistrement d'informations. A cet effet, la mémoire 58 comprend les instructions nécessaires et les données nécessaires à l'exécution du procédé de la figure 7.

L'émetteur 4 utilise un algorithme F de chiffrement pour obtenir le cryptogramme CW* du mot de contrôle transmis au récepteur 8 dans un message ECM. Le processeur 36 utilise un algorithme F$^{-1}$ de déchiffrement pour déchiffrer le cryptogramme CW* afin d'obtenir le mot de contrôle CW en clair qui est ensuite utilisé par le désembrouilleur 40. Ici ces algorithmes de chiffrement et de déchiffrement sont des algorithmes secrets.

Un exemple d'algorithmes de chiffrement et de déchiffrement secrets va maintenant être présenté avant de décrire plus en détail le fonctionnement du système 2.

Ici, une cryptographie symétrique est utilisée pour réaliser ces algorithmes F et F$^{-1}$ de chiffrement et de déchiffrement. Par exemple, ces algorithmes sont construits en modifiant l'algorithme cryptographique AES-128 (Advanced Encryption Standard - 128). Dans l'algorithme AES-128 la donnée d'entrée D est codée sur 128 bits et la clé est également codée sur 128 bits. Cet algorithme AES est bien connu de sorte que les détails relatifs à cet algorithme sont omis de cette description. On rappelle simplement que l'algorithme de chiffrement AES-128 comprend dix tours $T_i$ ou « rounds » en anglais, où l'indice i désigne le numéro du tour. Ces tours $T_i$ sont notamment composés des opérations suivantes :

- une opération de substitution lors de laquelle chaque octet est remplacé par un autre à partir d'une table de substitution préenregistrée,
- une rotation vers la droite d'un certain nombre de pas,
- une transformation linéaire lors de laquelle les octets sont combinés avec un polynôme prédéfini par une opération XOR, et
- une étape de combinaison des octets de la donnée à chiffrer et de la clé à l'aide d'une opération XOR (« OU EXCLUSIF »).

Les opérations du premier tour et du dernier tour peuvent différer légèrement de ce qui vient d'être indiqué précédemment.

Le cryptogramme intermédiaire obtenu à l'issu du i-ième tour $T_i$ est noté $D^*_i$ et le cryptogramme final obtenu après l'exécution complète de l'algorithme de chiffrement est noté $D^*$.

Ici, l'algorithme de chiffrement AES-128 est modifié par le fait qu'après chaque tour $T_i$ on applique au cryptogramme intermédiaire $D^*_i$ une fonction $F_i$ secrète. Ensuite, le tour suivant $T_{i+1}$ prend comme entrée la donnée $F_i(D^*_i)$ au lieu de la donnée $D^*_i$. Ainsi, $D^*_{i+1} = T_{i+1} \circ F_i(D^*_i)$. Autrement dit, après modification, l'algorithme secret F de chiffrement utilisé ici s'écrit de la façon suivante :

$$D^* = F(D) = F_{10} \circ T_{10} \circ \dots \circ F_2 \circ T_2 \circ F_1 \circ T_1(D)$$

où :

- D est la donnée en clair,
- $T_i$ correspond à la composition des opérations exécutées lors du $i^{\text{ème}}$ tour de l'algorithme de chiffrement AES-128,
- $F_i$ est la fonction secrète appliquée au cryptogramme intermédiaire $D^*_i$ obtenue à l'issu du tour $T_i$, et
- o est l'opération composition de fonctions.

Les pointillés présents dans la relation ci-dessus signifient que l'on a omis de représenter la formule complète pour simplifier son écriture.

Avec les mêmes notations, l'algorithme secret $F^{-1}$ de déchiffrement s'écrit comme suit :

$$D = F^{-1}(D^*) = T_1^{-1} \circ F_1^{-1} \circ T_2^{-1} \circ \dots \circ T_{10}^{-1} \circ F_{10}^{-1}(D^*)$$

où « $^{-1}$ » indique qu'il s'agit de l'inverse de la fonction correspondante.

Chaque fonction $F_i$ est formée par la composition de huit fonctions élémentaires inversibles $f_{i1}$ à $f_{i8}$. Ainsi, la fonction $F_i(D^*_i)$ s'écrit de la façon suivante :

$$F_i(D^*_i) = f_{i8} \circ f_{i7} \circ f_{i6} \circ f_{i5} \circ f_{i4} \circ f_{i3} \circ f_{i2} \circ f_{i1}(D^*_i).$$

Chaque fonction $f_{ij}$ est choisie dans le groupe composé des huit fonctions $V_k$ suivantes :

$$V_0(x,p) = x \text{ XOR } p$$

$$V_1(x,p) = x + p$$

$$V_2(x,p) = x - p$$

$$V_3(x,p) = x \times (2 \times p+1)$$

$$V_4(x,p) = \text{rot\_left}(x, p \bmod 8)$$

$$V_5(x,p) = \text{rot\_right}(x,\ p \bmod 8)$$

$$V_6(x,p) = \text{NOT}\ (x\ \text{XOR}\ p)$$

$$V_7(x,p) = x.$$

x et p sont des paramètres variables de chaque fonction Vk. x et p sont aussi tous les deux des opérandes des fonctions $V_k$.

La fonction « mod 8» est la fonction congruence modulo 8. La fonction rot_left est la fonction qui décale vers la gauche les bits de la donnée x d'un pas égal au résultat de l'opération p mod 8. La fonction rot_right est identique à la fonction rot_left à l'exception que le décalage se fait vers la droite.

Les fonctions XOR et NOT sont les fonctions booléennes bien connues.

Dans la définition d'une fonction $F_i$, plusieurs fonctions $f_{ij}$ peuvent être identiques.

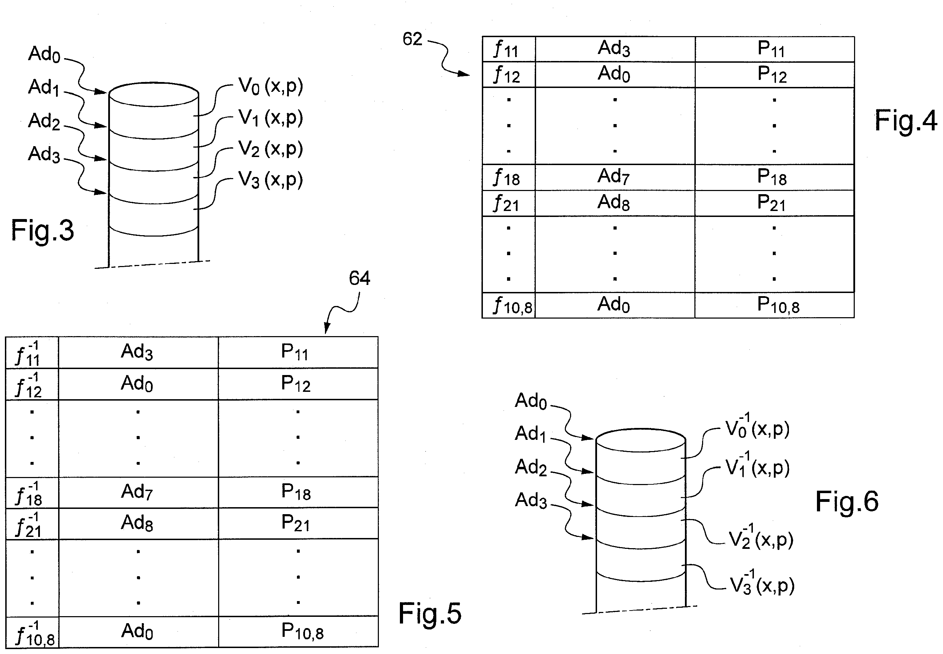

Le code exécutable de la fonction $V_k$ est enregistré et exécutable en appelant les instructions enregistrées à partir de l'adresse $Ad_k$ dans la mémoire 16. La section de la mémoire 16 dans laquelle sont enregistrés les codes exécutables des fonctions $V_k(x,p)$ est illustrée plus en détail en regard de la figure 3.

Le code exécutable de ces fonctions $V_k(x,p)$ est préenregistré avant toute utilisation de l'émetteur 4.

Dans la suite, on note $p_{ij}$ la valeur du paramètre p de la fonction $f_{ij}$. Avec cette notation, la fonction $f_{ij}$ s'écrit comme suit :

$$f_{ij}(x) = V_k(x,p_{ij})$$

où les indices k et j sont compris entre 1 et 8.

Dans ces conditions, une fonction $f_{ij}$ est entièrement définie dès que l'on connaît l'adresse $Ad_k$ à laquelle se trouve le code exécutable de la fonction $V_k$ et la valeur du paramètre $p_{ij}$.

L'adresse Adk et la valeur du paramètre $p_{ij}$ pour chaque fonction $f_{ij}$ sont des constantes numériques que l'on retrouve dans le code de l'algorithme F. Ces constantes numériques sont indépendantes de la donnée D à chiffrer et de la clé K de chiffrement. Ici, le code de l'algorithme F comprend donc quatre-vingts constantes numériques pour définir toutes les fonction $f_{ij}$ et d'autres constantes numériques définissant chacun des tours $T_i$.

L'adresse Adk est codée sur plusieurs octets, par exemple, deux octets. La valeur de chaque paramètre $p_{ij}$ est quant à elle codée sur un octet. Dès lors, la définition d'une fonction $f_{ij}$ peut être codée sur trois octets. Toutefois, pour limiter le nombre de bits nécessaires pour coder la définition d'une fonction $f_{ij}$, ici, une table 60 (voir figure 2) de conversion est utilisée. Cette table contient une première colonne contenant les huit valeurs possibles d'un identifiant IdV de l'adresse Adk de la fonction $V_k$. Par exemple, sur la figure 2, les valeurs 0, 1, 2, 3 et 4 de l'identifiant IdV écrites en binaire correspondent, respectivement, aux adresses $Ad_0$, $Ad_1$, Ad2, Ad3 et Ad4 à partir desquels les codes exécutables, respectivement des fonctions $V_0$, $V_1$, $V_2$, $V_3$, et $V_4$, peuvent être appelés.

La table 60 est préenregistrée dans la mémoire 16.

Grâce à l'utilisation de la table 60, la définition d'une fonction $f_{ij}$ peut être codée sur 11 bits seulement, trois bits pour coder la valeur de l'identifiant IdV et huit bits pour coder la valeur du paramètre $p_{ij}$.

Dès lors, pour coder la définition d'une fonction $F_i$, il faut au minimum 88 bits puisque chaque fonction $F_i$ est le résultat de la composition de huit fonctions $f_{ij}$. Enfin, pour définir l'ensemble des fonctions $F_i$ utilisées dans l'algorithme F de chiffrement, il faut donc 880 bits au minimum.

La définition de chacune des fonctions $f_{ij}$ utilisées dans l'algorithme F de chiffrement est enregistrée dans une table d'indirection 62. Un exemple de table 62 est représenté sur la figure 4. Cette table 62 comprend pour chaque fonction $f_{ij}$ :

-   un identifiant, noté ici $f_{ij}$, de la fonction $f_{ij}$,
-   l'adresse $Ad_k$ de l'endroit où se trouve le code exécutable de la fonction $V_k$ utilisée dans la définition de la fonction $f_{ij}$, et
-   la valeur du paramètre $p_{ij}$.

Par exemple, sur la figure 4, la fonction $f_{11}$ est définie par l'adresse Ad3 et par l'opérande $p_{11}$. Cela signifie que la fonction $f_{11}$ s'écrit de la façon suivante :

$$f_{11}(x) = V_3(x, p_{11}).$$

Pour simplifier la figure 4, les définitions des fonctions $f_{ij}$ qui ont été omises ont été remplacées par des pointillés.

Les fonctions $f_{ij}$ sont toutes inversibles. Dans ces conditions, les fonctions $F_i^{-1}(D'^*_i)$ utilisées dans l'algorithme $F^{-1}$ de déchiffrement s'écrivent comme suit :

$$F_i^{-1}(D'^*_i) = f_{i1}^{-1} \circ f_{i2}^{-1} \circ \dots \circ f_{i8}^{-1}(D'^*_i)$$

De façon similaire à ce qui a été décrit pour l'algorithme de chiffrement, chaque fonction $f_{ij}^{-1}$ est définie dans une table d'indirection 64 enregistrée dans la mémoire 58 du processeur 36. Un exemple de cette table 64 est représenté sur la figure 5. Comme pour la table 62, cette table associe pour chaque fonction $f_{ij}^{-1}$ un identifiant $f_{ij}^{-1}$ de cette fonction, l'adresse $Ad_k$ où se trouve le code exécutable de l'inverse de la fonction $V_k$ et la valeur de l'opérande $p_{ij}$.

La figure 6 représente plus en détail une portion de la mémoire 58 dans laquelle sont enregistrées les fonctions $V_k^{-1}(x,p)$. Pour simplifier, on a supposé ici que le code exécutable de la fonction $V_k^{-1}(x,p)$ est enregistré à la même adresse Adk dans la mémoire 58 que celle à laquelle est enregistré le code exécutable de la fonction $V_k(x,p)$ dans la mémoire 16. Avec cette hypothèse, la mémoire 58 contient une table de conversion identique à la table 60.

Le fonctionnement du système 2 va maintenant être décrit en regard du procédé de la figure 7. Initialement, une phase 70 de diffusion du contenu multimédia est exécutée. Au début, lors d'une étape 72, l'émetteur 4 génère un mot de contrôle CW.

Ensuite, lors d'une étape 74, ce mot de contrôle CW est utilisé pour embrouiller ou chiffrer le contenu multimédia. En parallèle, lors d'une étape 76, le mot de contrôle CW est chiffré par le module 10 en utilisant l'algorithme F pour obtenir le cryptogramme CW*. Une fois le cryptogramme CW* obtenu, toujours lors de l'étape 76, le générateur 12 génère un message ECM contenant ce cryptogramme.

Ensuite, lors d'une étape 78, le contenu multimédia embrouillé et le message ECM ainsi que d'éventuels messages EMM sont multiplexés par le multiplexeur 15.

Lors d'une étape 80, le contenu multimédia multiplexé ainsi obtenu est diffusé vers l'ensemble des récepteurs par l'intermédiaire du réseau 6.

Puis, lors d'une étape 82, le récepteur 8 reçoit le contenu multimédia multiplexé.

Lors d'une étape 84, le démultiplexeur 38 démultiplexe ce contenu multimédia multiplexé et transmet le contenu multimédia embrouillé à l'embrouilleur 40 et le message ECM au processeur de sécurité 36.

Lors d'une étape 86, le processeur 36 déchiffre le cryptogramme CW* en exécutant l'algorithme $F^{-1}$ et renvoie à l'embrouilleur 40 le mot de contrôle CW ainsi obtenu en clair.

Lors d'une étape 88, le désembrouilleur 40 désembrouille le contenu multimédia embrouillé reçu à l'aide du mot de contrôle CW transmis par le processeur 6 et transmet le contenu multimédia désembrouillé vers l'écran 42.

Lors d'une étape 90, le contenu multimédia désembrouillé est affiché en clair sur l'écran 42.

Le mot de contrôle CW est modifié à intervalle régulier. L'intervalle pendant lequel le mot de contrôle CW n'est pas modifié est appelé « cryptopériode ». Ainsi, les étapes 72 à 90 sont réitérées pour chaque cryptopériode. Par exemple, une cryptopériode dure moins de 20 secondes et, de préférence, moins de 11 secondes.

Lorsque cela est nécessaire, il est procédé à une phase 100 de génération d'une graine utilisable pour renouveler les algorithmes F et $F^{-1}$.

Au début de la phase 100, lors d'une étape 102, le générateur 20 génère une nouvelle graine. La taille, en nombre de bits, de cette graine est au moins quatre fois, et de préférence dix ou vingt fois, inférieure aux 880 bits nécessaires pour coder les constantes numériques définissant les fonctions $f_{ij}$.

Ici, la taille de la graine est de 16 bits. Ces 16 bits sont tirés de façon aléatoire. Par exemple, le tirage aléatoire est initialisé à partir d'un phénomène physique qui se produit sur l'une des interfaces utilisateurs de l'émetteur 4. Par exemple, le tirage aléatoire est initialisé par un déplacement d'une souris.

Ensuite, lors d'une étape 104, on procède à une expansion déterministe de la graine pour obtenir une suite de nombres. La taille de cette suite de nombres, en nombre de bits, est au moins égale au nombre de bits nécessaires pour coder les constantes numériques définissant les fonctions $f_{ij}$. Ici, l'expansion déterministe consiste à générer à partir d'une graine codée sur 16 bits une suite de 880 bits. Pour réaliser cette expansion, le générateur pseudo-aléatoire 26 est initialisé avec la graine obtenue lors de l'étape 102.

Ensuite, lors d'une étape 106, on crée le code d'un algorithme F' de chiffrement correspondant à un algorithme $F'^{-1}$ de déchiffrement renouvelé du cryptogramme CW*. Pour cela, on crée une nouvelle table d'indirection Tab' dans laquelle les constantes numériques sont différentes de celles contenues dans la table 62.

Plus précisément, lors d'une opération 108, les nouvelles constantes numériques à enregistrer dans la table d'indirection Tab' sont générées.

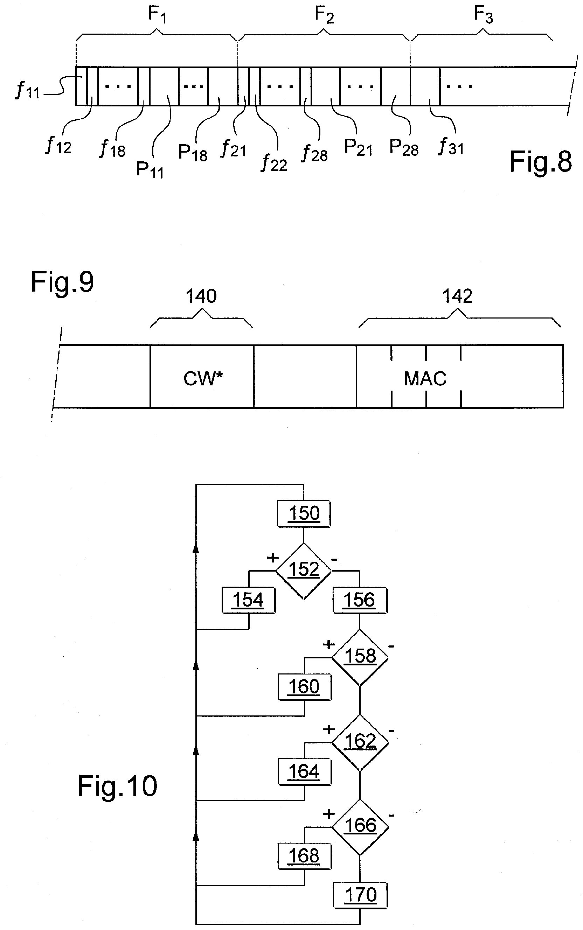

Pour expliquer la génération de ces constantes numériques, on a représenté sur la figure 8 le début de la suite de nombres obtenue après l'étape 104. Cette suite de nombres est ici une suite de nombres écrite en binaire. Il s'agit donc d'une succession de zéro et de un. Cette suite de nombres est divisée en dix segments successifs de 88 bits correspondant respectivement aux fonctions $F_1$, F2, ..., $F_{10}$. Ces segments sont tous structurés de la même façon. Cette structure est décrite en regard du segment $F_1$. Les 24 premiers bits du segment $F_1$ sont divisés en huit sous-segments notés $f_{11}$, $f_{12}$, ..., $f_{18}$. Le reste du segment $F_1$ est divisé en huit segments successifs notés $p_{11}$ à $p_{18}$.

Chaque sous-segment $f_{1j}$ contient la valeur, codée sur 3 bits, de l'identifiant IdV de la fonction $V_k$. Chaque sous-segment $p_{1j}$ contient la valeur du paramètre $p_{1j}$.

Le constructeur 28, à partir de la valeur contenue dans les sous-segments $f_{1j}$ et en utilisant la table 60 retrouve l'adresse codée sur deux octets correspondant à la valeur de cette identifiant. Ainsi, à partir de la valeur de l'identifiant $f_{1j}$ et du paramètre $p_{1j}$, le constructeur 28 génère les deux nouvelles constantes numériques définissant la nouvelle fonction $f_{1j}$.

Ce qui vient d'être décrit dans le cas particulier du segment $F_1$ s'applique également aux autres segments $F_i$.

Ensuite, lors d'une opération 110, les nouvelles constantes numériques générées lors de l'opération 108 sont enregistrées dans la table d'indirection Tab' indépendante de la table 62 mais structurellement identique.

Après l'étape 106, lors d'une étape 112, le vérificateur 24 vérifie la robustesse de l'algorithme F' de chiffrement obtenu. Par exemple, il vérifie que l'algorithme F' est robuste vis-à-vis des procédés de cryptanalyse utilisant la fréquence d'apparition de certains motifs de bits dans le cryptogramme. A cet effet, le vérificateur 24 chiffre avec l'algorithme F' une donnée prédéterminée à l'aide d'une clé K prédéterminée pour obtenir un cryptogramme D*. Ensuite, il vérifie la répartition aléatoire des bits à 0 et à 1 dans le cryptogramme D*. A cet effet, les différentes méthodes de vérification décrites dans le document suivant sont utilisées :

*Federal Information Processing Standard Publication (FIPS) 140-1, 11 janvier* 1994, *US Departement of Commerce/National Institute of Standard and Technology.*

Plus précisément, les méthodes de vérifications appliquées ici sont les mêmes que celles décrites au paragraphe 4.11.1 de ce document pour tester la répartition aléatoire des bits dans une suite de bits générée par un générateur pseudo-aléatoire (voir la section « Statistical Random Number Generator Tests » à la page 43 de ce document).

Lors de l'étape 112, on réalise également un test d'identité c'est-à-dire que l'on vérifie que le cryptogramme D* n'est pas identique à la donnée D.

Pour réaliser ces tests, la clé K choisie peut être celle actuellement utilisée pour réaliser le chiffrement du mot de contrôle CW.

Si l'un des tests appliqués lors de l'étape 112 n'est pas satisfait, le procédé retourne à l'étape 102. Dans le cas contraire, il est considéré que la graine utilisée permet de construire un algorithme de chiffrement robuste. Dans ce cas, la nouvelle table d'indirection Tab' ainsi que la graine sont mémorisées dans l'émetteur lors d'une étape 114. Lors de l'étape 114, la graine ainsi générée est également transmise au processeur 36 par l'intermédiaire du réseau 6 sur un canal caché. Toutefois, la table d'indirection Tab' n'est pas utilisée tant qu'un élément déclencheur n'intervient pas.

Ensuite, lorsque l'élément déclencheur intervient, on procède à une étape 116 lors de laquelle la table d'indirection 62 est remplacée par la table d'indirection Tab'. Après l'étape 116, le procédé retourne à la phase 70. Dès lors, lors des nouvelles exécutions de cette phase 70, c'est l'algorithme F' de chiffrement renouvelé qui est utilisé à la place de l'ancien algorithme F de chiffrement.

Ici, l'élément déclencheur est l'envoi d'un message ECM contenant un code particulier apte à déclencher le renouvellement de l'algorithme de déchiffrement dans le processeur 36.

En parallèle de la phase 100, lors d'une phase 120, le processeur 36 exécute un renouvellement de l'algorithme $F^{-1}$ de déchiffrement. Initialement, lors d'une étape 122, le processeur 36 reçoit la graine envoyée lors de l'étape 114 par l'émetteur 4. Ensuite, lors d'une étape 124, cette graine est mémorisée. Cette graine n'est pas utilisée tant que l'élément déclencheur n'intervient pas.

Lors d'une étape 126, le processeur 36 acquiert cet élément déclencheur. Par exemple le processeur 36 reçoit le message ECM contenant l'instruction déclenchant un renouvellement de l'algorithme de déchiffrement.

Puis, lors d'une étape 128, en réponse à l'acquisition de l'élément déclencheur, le générateur 54 procède à l'expansion déterministe de la graine reçue. L'étape 128 est identique à l'étape 104 de sorte que la suite de nombres obtenue est la même.

Ensuite, lors d'une étape 130, le code d'un algorithme $F'^{-1}$ de déchiffrement renouvelé correspondant à l'algorithme F' est construit à partir de cette suite de nombres. Lors d'une opération 132, les nouvelles constantes numériques à enregistrer dans la table 64 sont générées. Ici, cette opération 132 est identique à l'opération 108.

Ensuite, lors d'une opération 134 chacune des constantes numériques contenues dans la table 64 d'indirection est remplacée par la nouvelle constante numérique correspondante générée lors de l'étape 132. Ainsi, à l'issu de l'étape 130, le code de l'algorithme $F^{-1}$ a été remplacé par le code de l'algorithme $F'^{-1}$.

Ensuite, on retourne à la phase 70. Dès lors, lors des nouvelles exécutions de la phase 70, c'est l'algorithme $F'^{-1}$ de déchiffrement renouvelé qui est utilisé, en lieu et place de l'ancien algorithme $F^{-1}$, pour déchiffrer les cryptogram-

mes CW*.

Un exemple de transmission de la graine de l'émetteur 4 vers le récepteur 8 va maintenant être décrit. Pour cela, on rappelle brièvement, en regard de la figure 9, la structure d'un message ECM. Un message ECM contient un champ 140 contenant le cryptogramme CW* et un champ 142 contenant une signature ou redondance cryptographique appelée MAC. Par exemple, la signature 142 est codée sur 128 bits. Cette signature 142 permet de vérifier l'intégrité du message. Elle est construite en appliquant une fonction de signature prédéterminée sur les autres données du message. Par exemple, la signature MAC est construite en appliquant une fonction de hachage sur les bits des autres données contenues dans le même message ECM et en particulier en prenant en compte les bits du cryptogramme CW*.

Dans ce contexte, la réception de la graine et de l'élément déclencheur par le processeur 36 via un canal caché va maintenant être décrite en regard de la figure 10 dans le cas particulier où la graine est codée sur 128 bits.

Initialement, le processeur 36, lors d'une étape 150 calcule la signature MACc du message ECM reçu. Pour cela, la même fonction de signature que celle utilisée par l'émetteur 4 est appliquée sur les données du message ECM.

Ensuite, lors d'une étape 152, la signature MACc construite est comparée à la signature MACe contenue dans le champ 142 du message ECM.

Si ces signatures sont identiques, alors on procède à une étape 154 de traitement du message ECM par le processeur 36. Le traitement consiste en outre à déchiffrer le cryptogramme CW* si les titres d'accès contenus dans la mémoire 58 correspondent aux conditions d'accès contenues dans le message ECM reçu.

Dans le cas contraire, lors d'une étape 156, les signatures MACc et MACe sont combinées octet par octet à l'aide d'une opération XOR. Les seize octets correspondant aux résultats de cette combinaison sont enregistrés, respectivement, dans les cases RES[0] à RES[15] d'un résidu.

Ensuite, lors d'une étape 158, on vérifie si les octets enregistrés dans les cases d'indice pair du résidu sont égaux à une première valeur prédéterminée. Par exemple, on réalise les comparaisons suivantes pour i allant de 0 à 7 :

$$RES[2 \times i] = 0xA5$$

où 0xA5 est une valeur prédéterminée exprimée en hexadécimal.

Dans le cas où toutes les valeurs comparées sont égales, on procède à une étape 160 lors de laquelle les valeurs contenues dans les cases RES[2x i+1] d'indice impair sont enregistrées, respectivement, dans des cases GRAINE[i], pour i allant de 0 à 7. Ensuite, lors de l'étape 160, le message ECM reçu est traité normalement par le processeur 36.

Dans le cas où les cases comparées lors de l'étape 158 ne correspond par à la première valeur prédéterminée, on procède à une étape 162 de comparaison des cases RES[2x i] à une deuxième valeur prédéterminée, par exemple, 0x5A pour i allant de 0 à 7. Si toutes les cases comparées sont égales à la valeur 0x5A, alors on procède à une étape 164 lors de laquelle les valeurs contenues dans les cases RES[2x i+1] pour i allant de 0 à 7 sont stockées dans des cases GRAINE[8+i], respectivement. Lors de l'étape 164, le message ECM reçu est également traité normalement par le processeur 36.

Dans le cas où les cases comparées lors de l'étape 162 ne sont pas égales à la deuxième valeur prédéterminée, on procède à une étape 166 de comparaison des cases à une troisième valeur prédéterminée, par exemple 0x00, pour i allant de 0 à 7. Si toutes les cases comparées lors de l'étape 166 correspondent à la troisième valeur prédéterminée, alors, lors d'une étape 168, le message ECM est traité. De plus, le fait de procéder à l'étape 168 correspond l'acquisition de l'élément déclencheur. Autrement dit, l'étape 168 correspond à l'étape 126 du procédé de la figure 7. Ainsi, l'étape 168, autorise la poursuite du renouvellement de l'algorithme cryptographique, dans le processeur 36, comme décrit en regard de la phase 120 de la figure 7.

Dans le cas contraire, cela signifie que le message ECM reçu est erroné et, lors d'une étape 170, le processeur 36 le signale et le message ECM n'est pas traité.

Le procédé d'émission sur un canal caché de la graine ou de l'élément déclencheur se déduit du procédé de réception décrit en regard de la figure 10. Celui ne sera donc pas décrit plus en détail ici.

De nombreux autres modes de réalisation sont possibles. Par exemple, le processeur 36 peut être intégré de façon irréversible au désembrouilleur 40 ou au décodeur 34. Le processeur 36 peut également être un module logiciel modifié pour être plus résistant aux tentatives de cryptanalyse que d'autres parties des logiciels du décodeur 34.

Le réseau 6 peut être un réseau filaire. Le réseau 6 peut être également un réseau à commutation de paquets tel que le réseau Internet.

Dans le cas particulier décrit ici, les mémoires 16 et 58 contiennent le code exécutable des fonctions $V_k$. Ce code est directement exécutable par les modules 10 et 50. En variante, ces codes exécutables sont remplacés par des codes interprétables des fonctions $V_k$. Dans ce cas, les modules 10 et 50 comportent des interpréteurs, respectivement 180 et 182 (voir figure 1) aptes à interpréter ces codes. Ainsi, dans cette variante, les modules cryptographiques comprennent des interpréteurs aptes à interpréter le code de l'algorithme renouvelé construit par le constructeur.

Dans un autre mode de réalisation, le code exécutable des fonctions $V_k$ est remplacé par le code source de ces mêmes fonctions. Dans ce cas, les constructeurs 28 et 56 contiennent respectivement des compilateurs 184 et 186 (voir figure 1). De plus lors de l'étape de construction de l'algorithme renouvelé, ces compilateurs 184 et 186 sont utilisés pour compiler le code source correspondant aux fonctions $V_k$ utilisées pour définir les fonctions $f_{ij}$. Ainsi, les constructeurs 28 et 56 génèrent chacun un nouveau code exécutable par les modules 10 et 50 correspondant aux algorithmes renouvelés.

La plupart des algorithmes cryptographiques comprennent de nombreux opérandes indépendants de la donnée D à chiffrer ou à déchiffrer et de la clé utilisée pour cela. Par exemple, les algorithmes AES ou DES comprennent des tables de permutation et des tables de substitution ou S-box. D'autres algorithmes cryptographiques utilisent des tables d'indexation ou de décalage. Ces tables se présentent sous la forme de matrice contenant des valeurs numériques prédéterminées. Ces valeurs numériques sont des opérandes de l'opération de permutation, de substitution, d'indexation ou de décalage. On rencontre également dans ces algorithmes cryptographiques d'autres opérandes utilisés comme masque de blanchiment ou comme coefficient ou constante dans une formule de calcul mathématique. Pour renouveler un tel algorithme pourvu d'opérandes, il est possible de remplacer une partie ou la totalité de ces opérandes par de nouveaux opérandes. Pour cela, on peut procéder comme décrit pour le remplacement des paramètres $p_{ij}$ en regard de la figure 7.

Pour renouveler un algorithme cryptographique il est aussi possible de remplacer les opérateurs mathématiques de cet algorithme qui sont indépendants de la donnée à chiffrer ou à déchiffrer et de la clé à utiliser. En langage de bas niveau, les opérateurs mathématiques correspondent chacun à un mnémonique correspondant à une instruction directement exécutable ou interprétable par un calculateur électronique. Les opérateurs XOR, NOT, +, -, x , rot_left, rot_right, mod des fonctions $V_k$ sont des exemples d'opérateurs correspondant à des mnémoniques d'instructions du jeu d'instructions exécutables par le calculateur de l'émetteur et du récepteur. D'autres opérateurs mathématiques existent tels que les opérateurs AND et OR. Une méthode pour faire cela a déjà été décrite dans le cas particulier de l'algorithme cryptographique utilisé dans le système de la figure 1. En effet, à chaque renouvellement d'algorithme cryptographique, les opérateurs des fonctions $f_{ij}$ sont remplacés par d'autres opérateurs.

Pour renouveler le code de l'algorithme cryptographique il est encore possible de remplacer d'autres instructions du code que les opérateurs mathématiques. Par exemple, des instructions JUMP, CALL ou NOP (No OPeration) peuvent être remplacées Pour illustrer cela, nous prenons l'exemple du code suivant écrit en langage assembleur.

```
0x00 JUMP 0x10
[Code de la fonction V_0]
0x10 JUMP 0x20
[Code de la fonction V_1]
0x20 JUMP 0x30
[Code de la fonction V_2]
0x30 JUMP 0x40
```

En fonction de la valeur de la graine reçue, certaines des instructions JUMP peuvent être remplacées par des instructions NOP. Par exemple, si l'on remplace l'instruction «JUMP » à la ligne 0x10 par l'instruction NOP, on oblige le calculateur à exécuter le code correspondant à la fonction $V_1$. Le code de l'algorithme cryptographique est donc renouvelé sans avoir modifié les opérandes et les opérateurs mathématiques. Lorsque l'on remplace ces instructions par d'autres instructions, le flux d'exécution du code est systématiquement modifié alors que lorsque l'on remplace seulement les opérandes ou les opérateurs mathématiques ce n'est pas systématiquement le cas.

Pour construire l'algorithme cryptographique renouvelé, on peut procéder au remplacement des opérandes ou au remplacement des opérateurs mathématiques ou au remplacement d'instructions autres que les opérandes et opérateurs mathématiques ou encore à une combinaison quelconque de ces remplacements.

De préférence, seule un partie des constantes numériques du code de l'algorithme cryptographique est remplacée. Toutefois, le nombre de constantes remplacées pour obtenir un algorithme cryptographique renouvelé doit être important, c'est-à-dire de préférence supérieur à 2, 10 ou 50. Plus le nombre de constantes numériques remplacées est important, plus il est difficile de découvrir l'algorithme cryptographique renouvelé à partir d'informations sur l'ancien algorithme cryptographique.

En variante, un code secret est envoyé dans un message au processeur, par exemple, via le canal caché. Ce code secret indique au processeur que les données sur la graine sont contenues dans un message ultérieur prédéterminé. Ainsi, le code secret et les données sur la graine n'ont pas besoin d'être dans le même message.

Ce qui a été décrit ci-dessus dans le cas du renouvellement du code de l'algorithme de déchiffrement utilisé par le processeur 36 peut également être appliqué pour renouveler un algorithme G de chiffrement utilisé par le processeur 36. Dans ce cas, lors de la phase 100, l'algorithme correspondant à l'algorithme G construit par le constructeur 28 est l'algorithme G lui-même.

Ce qui a été décrit dans le cas particulier du renouvellement d'algorithmes de chiffrement et de déchiffrement d'un mot de contrôle peut être appliqué pour des algorithmes cryptographiques utilisés pour signer et vérifier la signature de messages tel que les messages ECM et EMM.

Ce qui vient d'être décrit dans le cas du renouvellement d'un algorithme cryptographique symétrique.

## Revendications

1. Procédé de renouvellement du code, exécutable ou interprétable par un calculateur électronique, d'un algorithme cryptographique symétrique apte à chiffrer une donnée D à l'aide d'une clé K pour obtenir un cryptogramme D* ou à déchiffrer un cryptogramme D* à l'aide d'une clé K pour obtenir une donnée D en clair, ce code comprenant au moins N constantes numériques, chaque constante numérique correspondant à un opérande ou à un mnémonique d'une instruction du code, la valeur de ces constantes numériques étant indépendante de la donnée D, de la clé K et du cryptogramme D*,
   dans lequel :

   - l'algorithme cryptographique est un algorithme comportant un nombre de tours $T_i$ entre lesquels sont intercalées des fonctions secrètes $F_i$, et
   - les fonctions $F_i$ sont formées par la composition de fonctions élémentaires inversibles sélectionnées à l'aide des constantes numériques,

   **caractérisé en ce que** ce procédé comprend :

   1) la réception (122) d'une graine tirée de façon aléatoire dont la taille, en nombre de bits, est au moins quatre fois inférieure au nombre de bits nécessaires pour coder les N constantes numériques du code de l'algorithme cryptographique,
   2) l'expansion (128) de la graine de façon déterministe pour obtenir une suite de nombres dont la taille, en nombre de bits, est au moins égale au nombre de bits nécessaires pour coder les N constantes numériques de l'algorithme cryptographique,
   3) la génération (132) de N nouvelles constantes numériques à partir de la suite de nombres obtenue, et
   4) le remplacement (134) des N constantes du code de l'algorithme cryptographique par les N nouvelles constantes générées pour obtenir le code d'un algorithme cryptographique renouvelé exécutable ou interprétable par le calculateur électronique.

2. Procédé selon la revendication 1, dans lequel chaque constante numérique correspond soit à un opérande soit à un opérateur mathématique qui, lorsqu'il est remplacé par un nouvel opérateur mathématique, ne modifie pas l'ordre d'exécution des instructions du code de l'algorithme cryptographique.

3. Procédé selon l'une quelconque des revendications précédentes, **caractérisé en ce que** :

   - si la présence d'un code secret au sein d'une première partie d'un message reçu est détectée, alors les données contenues dans une seconde partie prédéterminée de ce message ou d'un message reçu ultérieurement sont utilisées (160, 164) pour construire la graine, et
   - si la présence du code secret au sein de la première partie du message n'est pas détectée alors les données contenues dans les première et secondes parties sont utilisées (154, 170) à d'autres fins que le renouvellement de l'algorithme cryptographique.

4. Procédé selon la revendication 3, dans lequel si la présence du code secret n'est pas détectée, alors les données contenues dans les première et seconde parties sont utilisées (154, 170) pour vérifier l'intégrité des données contenues dans le ou les messages.

5. Procédé selon la revendication 3 ou 4, dans lequel le ou les messages sont des messages ECM (Entitlement Control Message) ou EMM (Entitlement Management Message).

6. Procédé selon l'une quelconque des revendications précédentes, dans lequel le remplacement des N constantes de l'algorithme cryptographique par les N nouvelles constantes générées est déclenché (168) en réponse à un événement déclencheur indépendant de la réception de la graine.

7. Procédé selon l'une quelconque des revendications précédentes, dans lequel la taille de la graine en nombre de bits est au moins dix fois inférieure au nombre de bits nécessaires pour coder les N constantes numériques.

8. Procédé selon l'une quelconque des revendications précédentes, dans lequel l'expansion déterministe (128) est réalisée à l'aide d'un générateur pseudo-aléatoire initialisé avec la graine reçue.

9. Procédé selon l'une quelconque des revendications précédentes, dans lequel N est strictement supérieur à deux et, de préférence, supérieur à dix.

10. Module de renouvellement du code, exécutable ou interprétable par un calculateur électronique, d'un algorithme cryptographique symétrique apte à chiffrer une donnée D à l'aide d'une clé K pour obtenir un cryptogramme D* ou à déchiffrer un cryptogramme D* à l'aide d'une clé K pour obtenir une donnée D en clair, ce code comprenant au moins N constantes numériques, chaque constante numérique correspondant à un opérande ou à un mnémonique d'une instruction du code, la valeur de ces constantes numériques étant indépendante de la donnée D, de la clé K et du cryptogramme D*,
dans lequel :

- l'algorithme cryptographique est un algorithme comportant un nombre de tours $T_i$ entre lesquels sont intercalées des fonctions secrètes $F_i$, et
- les fonctions $F_i$ sont formées par la composition de fonctions élémentaires inversibles sélectionnées à l'aide des constantes numériques,

**caractérisé en ce que** le module comprend :

- un sous-module (57) de réception d'une graine, tirée de façon aléatoire, dont la taille, en nombre de bits, est au moins quatre fois inférieure au nombre de bits nécessaires pour coder les N constantes numériques du code de l'algorithme cryptographique,
- un générateur (54) déterministe de nombres initialisable avec la graine pour obtenir une suite de nombres dont la taille, en nombre de bits, est au moins égale au nombre de bits nécessaires pour coder les N constantes numériques de l'algorithme cryptographique, et
- un constructeur (56) de code d'algorithme cryptographique apte à :

   ◦ générer N nouvelles constantes numériques à partir de la suite de nombres obtenue, et
   ◦ remplacer les N constantes du code de l'algorithme cryptographique par les N nouvelles constantes générées pour obtenir le code d'un algorithme cryptographique renouvelé exécutable ou interprétable par le calculateur électronique.

11. Processeur (36) de sécurité apte à exécuter ou à interpréter le code d'un algorithme cryptographique symétrique pour chiffrer une donnée D à l'aide d'une clé K pour obtenir un cryptogramme D* ou pour déchiffrer un cryptogramme D* à l'aide d'une clé K pour obtenir une donnée D en clair, ce code comprenant au moins N constantes numériques, chaque constante numérique correspondant à un opérande ou à un mnémonique d'une instruction du code, la valeur de ces constantes numériques étant indépendante de la donnée D, de la clé K et du cryptogramme D*,
**caractérisé en ce que** le processeur de sécurité comprend un module (52) de renouvellement du code de cet algorithme cryptographique conforme à la revendication 10.

12. Procédé de génération d'une graine destinée à être utilisée par un procédé de renouvellement du code d'un algorithme cryptographique symétrique conforme à l'une quelconque des revendications 1 à 9, ce procédé comportant :

   a) le tirage aléatoire (102) d'une graine dont la taille, en nombre de bits, est au moins quatre fois inférieure au nombre de bits nécessaires pour coder les N constantes numériques du code de l'algorithme cryptographique à renouveler,

**caractérisé en ce que** ce procédé comprend également :

   b) la création (106) d'un code d'algorithme renouvelé de chiffrement ou de déchiffrement en exécutant les étapes 2) à 4) du procédé de renouvellement conforme à l'une quelconque des revendications 1 à 9 lorsque la graine reçue est celle tirée lors de l'étape a),
   c) la vérification (112) de la robustesse du code de l'algorithme renouvelé vis-à-vis d'au moins un procédé de cryptanalyse,

d) si le code de l'algorithme renouvelé n'est pas robuste vis-à-vis du procédé de cryptanalyse, alors le retour à l'étape a) et, dans le cas contraire,
e) la transmission (114) de la graine tirée aléatoirement à un récepteur apte à mettre en œuvre le procédé de renouvellement du code de l'algorithme cryptographique.

**13.** Module de génération d'une graine destinée à être utilisée pour renouveler le code d'un algorithme cryptographique symétrique à l'aide d'un procédé conforme à l'une quelconque des revendications 1 à 9, ce module comportant un générateur (20) apte à tirer aléatoirement une graine dont la taille, en nombre de bits, est au moins quatre fois inférieure au nombre de bits nécessaires pour coder les N constantes numériques du code de l'algorithme cryptographique à renouveler,
**caractérisé en ce que** ce module comprend également :

- un sous-module (22) de création d'un code d'algorithme renouvelé de chiffrement ou de déchiffrement en exécutant les étapes 2) à 4) du procédé de renouvellement conforme à l'une quelconque des revendications 1 à 9 lorsque la graine reçue est celle tirée par le générateur, et
- un vérificateur (24) de la robustesse du code de l'algorithme renouvelé vis-à-vis d'au moins un procédé de cryptanalyse, ce vérificateur étant apte à :

  ◦ inhiber la transmission de la graine tirée aléatoirement vers un récepteur si l'algorithme renouvelé n'est pas robuste vis-à-vis du procédé de cryptanalyse et, dans le cas contraire,
  ◦ autoriser la transmission de la graine tirée aléatoirement à un récepteur apte à mettre en œuvre le procédé de renouvellement du code de l'algorithme cryptographique.

**14.** Support d'enregistrement d'informations, **caractérisé en ce qu'**il comporte des instructions pour l'exécution d'un procédé conforme à l'une quelconque des revendications 1 à 9 et 12, lorsque ces instructions sont exécutées par un calculateur électronique.

## Patentansprüche

**1.** Verfahren zur Erneuerung des von einem elektronischen Rechner ausführbaren oder interpretierbaren Codes eines symmetrischen kryptografischen Algorithmus, der geeignet ist, ein Datenelement D mithilfe eines Schlüssels K zu verschlüsseln, um ein Kryptogramm D* zu erhalten, oder ein Kryptogramm D* mithilfe eines Schlüssels K zu entschlüsseln, um ein unverschlüsseltes Datenelement D zu erhalten, wobei dieser Code mindestens N numerische Konstanten umfasst, wobei jede numerische Konstante einem Operanden oder einem mnemonischen Zeichen einer Anweisung des Codes entspricht, wobei der Wert dieser numerischen Konstanten unabhängig von dem Datenelement D, dem Schlüssel K und dem Kryptogramm D* ist,
wobei:

- der kryptografische Algorithmus ein Algorithmus ist, der eine Anzahl von Touren $T_i$ umfasst, zwischen denen geheime Funktionen $F_i$ eingefügt sind, und
- die Funktionen $F_i$ durch die Komposition von invertierbaren elementaren Funktionen gebildet werden, die mithilfe der numerischen Konstanten ausgewählt werden,

**dadurch gekennzeichnet, dass** dieses Verfahren umfasst:

1) den Empfang (122) einer zufällig gewählten Seed, deren Größe, als Anzahl der Bits ausgedrückt, höchstens ein Viertel der Anzahl der Bits beträgt, die erforderlich sind, um die N numerischen Konstanten des Codes des kryptografischen Algorithmus zu codieren,
2) die Expansion (128) der Seed auf deterministische Weise, um eine Folge von Zahlen zu erhalten, deren Größe, als Anzahl der Bits ausgedrückt, mindestens gleich der Anzahl der Bits ist, die erforderlich sind, um die N numerischen Konstanten des Codes des kryptografischen Algorithmus zu codieren,
3) die Erzeugung (132) von N neuen numerischen Konstanten aus der erhaltenen Folge von Zahlen, und
4) das Ersetzen (134) der N Konstanten des Codes des kryptografischen Algorithmus durch die erzeugten N neuen Konstanten, um den von dem elektronischen Rechner ausführbaren oder interpretierbaren erneuerten Code eines kryptografischen Algorithmus zu erhalten.

**2.** Verfahren nach Anspruch 1, wobei jede numerische Konstante entweder einem Operanden oder einem mathematischen Operator entspricht, der, wenn er durch einen neuen mathematischen Operator ersetzt wird, die Reihenfolge der Ausführung der Anweisungen des Codes des kryptografischen Algorithmus nicht ändert.

3. Verfahren nach einem der vorhergehenden Ansprüche, **dadurch gekennzeichnet, dass**:

- falls das Vorhandensein eines geheimen Codes innerhalb eines ersten Teils einer empfangenen Nachricht erkannt wird, die Daten, die in einem vorbestimmten zweiten Teil dieser Nachricht oder einer später empfangenen Nachricht enthalten sind, verwendet werden (160, 164), um die Seed zu konstruieren, und
- falls das Vorhandensein des geheimen Codes innerhalb des ersten Teils der Nachricht nicht erkannt wird, die Daten, die im ersten und im zweiten Teil enthalten sind, für andere Zwecke als zur Erneuerung des kryptografischen Algorithmus verwendet werden (154, 170).

4. Verfahren nach Anspruch 3, wobei, falls das Vorhandensein des geheimen Codes nicht erkannt wird, die Daten, die im ersten und im zweiten Teil enthalten sind, verwendet werden (154, 170), um die Integrität der Daten zu überprüfen, die in der oder den Nachrichten enthalten sind.

5. Verfahren nach Anspruch 3 oder 4, wobei die Nachricht oder die Nachrichten Nachrichten des Typs ECM (Entitlement Control Message) oder EMM (Entitlement Management Message) sind.

6. Verfahren nach einem der vorhergehenden Ansprüche, wobei das Ersetzen der N Konstanten des kryptografischen Algorithmus durch die erzeugten N neuen Konstanten in Reaktion auf ein auslösendes Ereignis ausgelöst wird (168), unabhängig vom Empfang der Seed.

7. Verfahren nach einem der vorhergehenden Ansprüche, wobei die Größe der Seed, als Anzahl der Bits ausgedrückt, höchstens ein Zehntel der Anzahl der Bits beträgt, die erforderlich sind, um die N numerischen Konstanten zu codieren.

8. Verfahren nach einem der vorhergehenden Ansprüche, wobei die deterministische Expansion (128) mithilfe eines mit der empfangenen Seed initialisierten Pseudozufallsgenerators durchgeführt wird.

9. Verfahren nach einem der vorhergehenden Ansprüche, wobei N streng größer als zwei und vorzugsweise größer als zehn ist.

10. Modul zur Erneuerung des von einem elektronischen Rechner ausführbaren oder interpretierbaren Codes eines symmetrischen kryptografischen Algorithmus, der geeignet ist, ein Datenelement D mithilfe eines Schlüssels K zu verschlüsseln, um ein Kryptogramm D* zu erhalten, oder ein Kryptogramm D* mithilfe eines Schlüssels K zu entschlüsseln, um ein unverschlüsseltes Datenelement D zu erhalten, wobei dieser Code mindestens N numerische Konstanten umfasst, wobei jede numerische Konstante einem Operanden oder einem mnemonischen Zeichen einer Anweisung des Codes entspricht, wobei der Wert dieser numerischen Konstanten unabhängig von dem Datenelement D, dem Schlüssel K und dem Kryptogramm D* ist,
wobei:

- der kryptografische Algorithmus ein Algorithmus ist, der eine Anzahl von Touren $T_i$ umfasst, zwischen denen geheime Funktionen $F_i$ eingefügt sind, und
- die Funktionen $F_i$ durch die Komposition von invertierbaren elementaren Funktionen gebildet werden, die mithilfe der numerischen Konstanten ausgewählt werden,

**dadurch gekennzeichnet, dass** das Modul umfasst:

- ein Untermodul (57) zum Empfang einer zufällig gewählten Seed, deren Größe, als Anzahl der Bits ausgedrückt, höchstens ein Viertel der Anzahl der Bits beträgt, die erforderlich sind, um die N numerischen Konstanten des Codes des kryptografischen Algorithmus zu codieren,
- einen deterministischen Zahlengenerator (54), der mit der Seed initialisierbar ist, um eine Folge von Zahlen zu erhalten, deren Größe, als Anzahl der Bits ausgedrückt, mindestens gleich der Anzahl der Bits ist, die erforderlich sind, um die N numerischen Konstanten des Codes des kryptografischen Algorithmus zu codieren, und
- eine Code-Ersteller (56) eines kryptografischen Algorithmus, der geeignet ist:

o aus der erhaltenen Folge von Zahlen N neue numerische Konstanten zu erzeugen, und
o die N Konstanten des Codes des kryptografischen Algorithmus durch die erzeugten N neuen Konstanten zu ersetzen, um den von dem elektronischen Rechner ausführbaren oder interpretierbaren erneuerten Code eines kryptografischen Algorithmus zu erhalten.

11. Sicherheitsprozessor (36), welcher geeignet ist, den Code eines symmetrischen kryptografischen Algorithmus auszuführen, um ein Datenelement D mithilfe eines Schlüssels K zu verschlüsseln, um ein Kryptogramm D* zu erhalten, oder um ein Kryptogramm D* mithilfe eines Schlüssels K zu entschlüsseln, um ein unverschlüsseltes Datenelement D zu erhalten, wobei dieser Code mindestens N numerische Konstanten umfasst, wobei jede numerische Konstante einem Operanden oder einem mnemonischen Zeichen einer Anweisung des Codes entspricht, wobei der Wert dieser numerischen Konstanten unabhängig von dem Datenelement D, dem Schlüssel K und dem Kryptogramm D* ist,
**dadurch gekennzeichnet, dass** der Sicherheitsprozessor ein Modul (52) zur Erneuerung des Codes dieses kryptografischen Algorithmus gemäß Anspruch 10 umfasst.

12. Verfahren zur Erzeugung einer Seed, die dazu bestimmt ist, bei einem Verfahren zur Erneuerung des Codes eines symmetrischen kryptografischen Algorithmus gemäß einem der Ansprüche 1 bis 9 verwendet zu werden, wobei dieses Verfahren umfasst:

a) die zufällige Wahl (102) einer Seed, deren Größe, als Anzahl der Bits ausgedrückt, höchstens ein Viertel der Anzahl der Bits beträgt, die erforderlich sind, um die N numerischen Konstanten des zu erneuernden Codes des kryptografischen Algorithmus zu codieren,

**dadurch gekennzeichnet, dass** dieses Verfahren außerdem umfasst:

b) die Erzeugung (106) eines erneuerten Codes des Algorithmus zur Verschlüsselung oder Entschlüsselung durch Ausführung der Schritte 2) bis 4) des Verfahrens zur Erneuerung gemäß einem der Ansprüche 1 bis 9, wenn die empfangen Seed diejenige ist, die in Schritt a) gewählt wurde,
c) die Überprüfung (112) der Robustheit des erneuerten Codes des Algorithmus gegenüber wenigstens einem Verfahren der Kryptoanalyse,
d) falls der erneuerte Code des Algorithmus nicht robust gegenüber dem Verfahren der Kryptoanalyse ist, Rückkehr zu Schritt a), und andernfalls
e) die Übertragung (114) der zufällig gewählten Seed an einen Empfänger, der in der Lage ist, das Verfahren zur Erneuerung des Codes des kryptografischen Algorithmus durchzuführen.

13. Modul zur Erzeugung einer Seed, die dazu bestimmt ist, verwendet zu werden, um den Code eines symmetrischen kryptografischen Algorithmus mithilfe eines Verfahrens gemäß einem der Ansprüche 1 bis 9 zu erneuern, wobei dieses Modul einen Generator (20) umfasst, der geeignet ist, eine Seed zufällig zu wählen, deren Größe, als Anzahl der Bits ausgedrückt, höchstens ein Viertel der Anzahl der Bits beträgt, die erforderlich sind, um die N numerischen Konstanten des Codes des zu erneuernden kryptografischen Algorithmus zu codieren,
**dadurch gekennzeichnet, dass** dieses Modul außerdem umfasst:

- ein Untermodul (22) zur Erzeugung eines erneuerten Codes des Algorithmus zur Verschlüsselung oder Entschlüsselung durch Ausführung der Schritte 2) bis 4) des Verfahrens zur Erneuerung gemäß einem der Ansprüche 1 bis 9, wenn die empfangen Seed diejenige ist, die von dem Generator gewählt wurde,
- einen Verifizierer (24) der Robustheit des erneuerten Codes des Algorithmus gegenüber wenigstens einem Verfahren der Kryptoanalyse, wobei dieser Verifizierer geeignet ist:

o die Übertragung der zufällig gewählten Seed an einen Empfänger zu verhindern, falls der erneuerte Algorithmus nicht robust gegenüber dem Verfahren der Kryptoanalyse ist, und andernfalls
o die Übertragung der zufällig gewählten Seed an einen Empfänger, der in der Lage ist, das Verfahren zur Erneuerung des Codes des kryptografischen Algorithmus durchzuführen, zu genehmigen.

14. Informationsaufzeichnungsmedium, **dadurch gekennzeichnet, dass** es Anweisungen zur Ausführung eines Verfahrens gemäß einem der Ansprüche 1 bis 9 und 12, wenn diese Anweisungen von einem elektronischen Rechner ausgeführt werden, umfasst.

**Claims**

1. Method for renewing the code, which can be executed or interpreted by an electronic computer, of a symmetric cryptographic algorithm able to encrypt a datum D using a key K to obtain a cryptogram D* or to decrypt a cryptogram D* using a key K to obtain an unencrypted datum D, this code comprising at least N numerical constants, each numerical constant corresponding to an operand or to a mnemonic of an instruction of the code, the value of these numerical constants being independent of the datum D, of the key K and of the cryptogram D*, wherein:

   - the cryptographic algorithm is an algorithm comprising a number of turns $T_i$ between which secret functions $F_i$ are inserted, and
   - the functions $F_i$ are formed by way of the composition of irreversible elementary functions selected using the numerical constants,

   **characterized in that** the method comprises:

   1) the reception (122) of a seed drawn randomly of which the size, in number of bits, is at least four times smaller than the number of bits required to code the N numerical constants of the code of the cryptographic algorithm,
   2) the expansion (128) of the seed in a deterministic manner to obtain a series of numbers of which the size, in number of bits, is at least equal to the number of bits required to code the N numerical constants of the cryptographic algorithm,
   3) the generation (132) of N new numerical constants on the basis of the obtained series of numbers, and
   4) the replacement (134) of the N constants of the code of the cryptographic algorithm with the generated N new constants to obtain the code of a renewed cryptographic algorithm which can be executed or interpreted by an electronic computer.

2. Method according to Claim 1, wherein each numerical constant corresponds either to an operand or to a mathematical operator which, when replaced with a new mathematical operator, does not change the order of execution of the instructions of the code of the cryptographic algorithm.

3. Method according to either one of the preceding claims, **characterized in that**:

   - if the presence of a secret code within a first part of a received message is detected, then the data contained in a predetermined second part of this message or of a subsequently received message are used (160, 164) to construct the seed, and
   - if the presence of the secret code within the first part of the message is not detected then the data contained in the first and second parts are used (154, 170) for purposes other than the renewal of the cryptographic algorithm.

4. Method according to Claim 3, wherein if the presence of the secret code is not detected, then the data contained in the first and second parts are used (154, 170) to check the integrity of the data contained in the one or more messages.

5. Method according to Claim 3 or 4, wherein the one or more messages are ECM (Entitlement Control Message) or EMM (Entitlement Management Message) messages.

6. Method according to any one of the preceding claims, wherein the replacement of the N constants of the cryptographic algorithm with the generated N new constants is triggered (168) in response to a trigger event independent of the reception of the seed.

7. Method according to any one of the preceding claims, wherein the size of the seed in number of bits is at least ten times smaller than the number of bits required to code the N numerical constants.

8. Method according to any one of the preceding claims, wherein the deterministic expansion (128) is performed using a pseudo-random generator initialized with the received seed.

9. Method according to any one of the preceding claims, wherein N is strictly greater than two and, preferably, greater than ten.

**10.** Module for renewing the code, which can be executed or interpreted by an electronic computer, of a symmetric cryptographic algorithm able to encrypt a datum D using a key K to obtain a cryptogram D* or to decrypt a cryptogram D* using a key K to obtain an unencrypted datum D, this code comprising at least N numerical constants, each numerical constant corresponding to an operand or to a mnemonic of an instruction of the code, the value of these numerical constants being independent of the datum D, of the key K and of the cryptogram D*, wherein:

- the cryptographic algorithm is an algorithm comprising a number of turns $T_i$ between which secret functions $F_i$ are inserted, and
- the functions $F_i$ are formed by way of the composition of irreversible elementary functions selected using the numerical constants,

**characterized in that** the module comprises:

- a submodule (57) for receiving a seed, drawn randomly of which the size, in number of bits, is at least four times smaller than the number of bits required to code the N numerical constants of the code of the cryptographic algorithm,
- a deterministic number generator (54) that can be initialized with the seed to obtain a series of numbers of which the size, in number of bits, is at least equal to the number of bits required to code the N numerical constants of the cryptographic algorithm, and
- a cryptographic algorithm code constructor (56) able to:

o generate N new numerical constants on the basis of the obtained series of numbers, and
o replace the N constants of the code of the cryptographic algorithm with the generated N new constants to obtain the code of a renewed cryptographic algorithm which can be executed or interpreted by an electronic computer.

**11.** Security processor (36) able to execute or interpret the code of a symmetrical cryptographic algorithm to encrypt a datum D using a key K to obtain a cryptogram D* or to decrypt a cryptogram D* using a key K to obtain an unencrypted datum D, this code comprising at least N numerical constants, each numerical constant corresponding to an operand or to a mnemonic of an instruction of the code, the value of these numerical constants being independent of the datum D, of the key K and of the cryptogram D*, **characterized in that** the security processor comprises a module (52) for renewing the code of this cryptographic algorithm in accordance with Claim 10.

**12.** Method for generating a seed intended to be used by a method for renewing the code of a symmetric cryptographic algorithm in accordance with any one of Claims 1 to 9, this method comprising:

a) the random drawing (102) of a seed of which the size, in number of bits, is at least four times smaller than the number of bits required to code the N numerical constants of the code of the cryptographic algorithm to be renewed,

**characterized in that** this method also comprises:

b) the creation (106) of a renewed encryption or decryption algorithm code by executing steps 2) to 4) of the renewal method in accordance with any one of Claims 1 to 9 when the received seed is that drawn in step a),
c) the checking (112) of the robustness of the renewed algorithm code with respect to at least one cryptanalysis method,
d) if the renewed algorithm code is not robust with respect to the cryptanalysis method, then the return to step a) and, otherwise,
e) the transmission (114) of the randomly drawn seed to a receiver able to implement the method for renewing the code of the cryptographic algorithm.

**13.** Module for generating a seed intended to be used to renew the code of a symmetric cryptographic algorithm using a method in accordance with any one of Claims 1 to 9, this module comprising a generator (20) able to randomly draw a seed of which the size, in number of bits, is at least four times smaller than the number of bits required to code the N numerical constants of the code of the cryptographic algorithm to be renewed, **characterized in that** this module also comprises:

- a sub-module (22) for creating a renewed encryption or decryption algorithm code by executing steps 2) to 4) of the renewal method in accordance with any one of Claims 1 to 9 when the received seed is that drawn by the generator, and
- a checker (24) for checking the robustness of the renewed algorithm code with respect to at least one cryptanalysis method, this checker being able to:

  o inhibit the transmission of the randomly drawn seed to a receiver if the renewed algorithm is not robust with respect to the cryptanalysis method and, otherwise,
  o authorize the transmission of the randomly drawn seed to a receiver able to implement the method for renewing the code of the cryptographic algorithm.

14. Information storage medium, **characterized in that** it comprises instructions for the execution of a method in accordance with any one of Claims 1 to 9 and 12, when these instructions are executed by an electronic computer.

Fig.1

EP 2 377 264 B1

| Id$_V$ | |
|------|-------|
| 000 | Ad$_0$ |
| 001 | Ad$_1$ |
| 010 | Ad$_2$ |
| 011 | Ad$_3$ |
| 100 | Ad$_4$ |

60

Fig.2

## Fig.4

62

| | | |
|---|---|---|
| $f_{11}$ | $Ad_3$ | $P_{11}$ |
| $f_{12}$ | $Ad_0$ | $P_{12}$ |
| . | . | . |
| . | . | . |
| . | . | . |
| $f_{18}$ | $Ad_7$ | $P_{18}$ |
| $f_{21}$ | $Ad_8$ | $P_{21}$ |
| . | . | . |
| . | . | . |
| . | . | . |
| $f_{10,8}$ | $Ad_0$ | $P_{10,8}$ |

## Fig.3

$Ad_0$ → $V_0(x,p)$
$Ad_1$ → $V_1(x,p)$
$Ad_2$ → $V_2(x,p)$
$Ad_3$ → $V_3(x,p)$

## Fig.6

$Ad_0$ → $V_0^{-1}(x,p)$
$Ad_1$ → $V_1^{-1}(x,p)$
$Ad_2$ → $V_2^{-1}(x,p)$
$Ad_3$ → $V_3^{-1}(x,p)$

## Fig.5

64

| | | |
|---|---|---|
| $f_{11}^{-1}$ | $Ad_3$ | $P_{11}$ |
| $f_{12}^{-1}$ | $Ad_0$ | $P_{12}$ |
| . | . | . |
| . | . | . |
| . | . | . |
| $f_{18}^{-1}$ | $Ad_7$ | $P_{18}$ |
| $f_{21}^{-1}$ | $Ad_8$ | $P_{21}$ |
| . | . | . |
| . | . | . |
| . | . | . |
| $f_{10,8}^{-1}$ | $Ad_0$ | $P_{10,8}$ |

Fig.7

Fig.8

Fig.9

Fig.10

## EP 2 377 264 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008142612 A2

**Littérature non-brevet citée dans la description**

- Applied Cryptography. Bruce Schneier John Wiley & Sons, 1996
- **BART PRENEEL et al.** A software implementation of the McEliece Public-key cryptosystem. *Proceedings of the 13th Symposium on information theory in the Benelux,* 01 Janvier 1992, 119-126
- A new paradigm for public key identification. **JACQUES STERN.** IEEE Transaction on information theory. IEEE Press USA, 01 Novembre 1996, vol. 42
- Functional Model of Conditional Access System. *EBU Review-Technical European Broadcasting Union,* 21 Décembre 1995